# EUROPEAN PATENT APPLICATION

(11) **EP 4 481 066 A1**
(43) Date of publication of application: **25.12.2024**
(21) Application number: 23779279.1
(22) Date of filing: 06.03.2023
(51) Int. Cl.: C22B 1/16

(54) **GRANULATED PARTICLE PREDICTION METHOD, GRANULATED PARTICLE PRODUCTION METHOD, GRANULATED PARTICLE PRODUCTION DEVICE, AND SINTERED ORE PRODUCTION METHOD**

(30) Priority: 28.03.2022 JP 2022051821
(71) Applicant: JFE Steel Corporation, Tokyo 100-0011 (JP)
(72) Inventor: TAKEHARA Kenta, Tokyo 100-0011 (JP); HIGUCHI Takahide, Tokyo 100-0011 (JP); IWAMI Yuji, Tokyo 100-0011 (JP); HORITA Kenya, Tokyo 100-0011 (JP); BAMBA Haruhisa, Tokyo 100-0011 (JP)
(74) Representative: Hoffmann Eitle
(86) International application number: PCT/JP2023/008409
(87) International publication number: WO 2023/189251

(57) **Abstract**

Provided is a granulated particle prediction method, a granulated particle production method, a granulated particle production apparatus, and a sintered ore production method are provided, each of which can predict granulation and component concentration of granulated particles even when mixing conditions or moisture content of raw materials vary. The granulated particle prediction method is for predicting granulation of granulated particles produced by adding moisture to sintering raw material including iron-containing raw material and coke breeze and granulating in a granulator and includes predicting granulation of the granulated particles using a granulation prediction model that inputs granulation conditions, including mix ratio of the raw materials included in the sintering raw material and moisture content of the sintering raw material during granulation, and outputs the granulation of the granulated particles.

## Description

### TECHNICAL FIELD

The present disclosure relates to a granulated particle prediction method, a granulated particle production method, a granulated particle production apparatus, and a sintered ore production method, where granulated particles are granulated from sintering raw material by a granulator.

### BACKGROUND

In a sintered ore production process, sintering raw material including iron ore, coke breeze, calcium oxide (CaO), and the like is not used as is, but is granulated into granulated particles before use. Granulated particles are particles of sintering raw material granulated by a granulator such as a drum mixer. Particle size distribution of granulated particles and composition of each granulation range are important to sintered ore productivity. For example, improving an upper layer yield of sintered ore is possible by segregating coke breeze in the upper layer, and knowing the carbon component of each granulation range is important in terms of yield rate improvement. Here, Patent Literature (PTL) 1 describes an estimation method that assumes that composition of each granulation range can be estimated when an estimation matrix is constant, that is, when particle size distribution of a target raw material (for example, coke breeze) remains constant.

### CITATION LIST

### Patent Literature

PTL 1: JP 2020-012185 A

### SUMMARY

### (Technical Problem)

However, it has been found that even when the particle size distribution of coke breeze remains constant, the composition of each granulation range varies significantly when mixing conditions of raw materials change. Therefore, the technology of PTL 1 cannot estimate the composition of each granulation range when mixing conditions of raw materials are changed. Further, PTL 1 does not take into account moisture content during granulation and estimation is not possible in the case of a change in moisture content.

It would be helpful to provide a granulated particle prediction method, a granulated particle production method, a granulated particle production apparatus, and a sintered ore production method, each of which can predict granulation and component concentration of granulated particles even when mixing conditions or moisture content of raw materials vary.

### (Solution to Problem)

A granulated particle prediction method according to an embodiment of the present disclosure is
a granulated particle prediction method for granulated particles produced by adding moisture to sintering raw material including iron-containing raw material and coke breeze and granulating in a granulator, the granulated particle prediction method comprising
predicting granulation of the granulated particles using a granulation prediction model that inputs granulation conditions, including mix ratio of the raw materials included in the sintering raw material and moisture content of the sintering raw material during granulation, and outputs the granulation of the granulated particles.

A granulated particle production method according to an embodiment of the present disclosure is
a granulated particle production method for granulated particles produced by adding moisture to sintering raw material including iron-containing raw material and coke breeze and granulating, the granulated particle production method comprising:
using the granulation prediction model of the granulated particle prediction method to acquire a setting value of the granulation conditions able to achieve a target granulation of the granulated particles; and
granulating the granulated particles using the setting value acquired by the granulated particle prediction method.

A granulated particle production apparatus according to an embodiment of the present disclosure comprises:
a granulator configured to granulate granulated particles from sintering raw material including a plurality of raw materials; and
a control unit configured to estimate particle size distribution of the granulated particles to be granulated by the granulator, wherein
the control unit predicts granulation of the granulated particles using a granulation prediction model that inputs granulation conditions, including mix ratio of the raw materials included in the sintering raw material and moisture content of the sintering raw material during granulation, and outputs the granulation of the granulated particles.

A granulated particle prediction method according to an embodiment of the present disclosure is
a granulated particle prediction method for granulated particles produced by adding moisture to sintering raw material including iron-containing raw material and coke breeze and granulating in a granulator, the granulated particle prediction method comprising
predicting content of a specific component of the granulated particles in one particle size range using a component prediction model that inputs granulation conditions, including mix ratio of the raw materials included in the sintering raw material and moisture content of the sintering raw material during granulation, and outputs the content of the specific component of the granulated particles in the one particle size range, where particle size of the granulated particles is divided into a plurality of particle size ranges.

A granulated particle production method according to an embodiment of the present disclosure is
a granulated particle production method for granulated particles produced by adding moisture to sintering raw material including iron-containing raw material and coke breeze and granulating, the granulated particle production method comprising:
using the component prediction model of the granulated particle prediction method to acquire a setting value of the granulation conditions able to achieve a target content of a specific component of the granulated particles; and
granulating the granulated particles using the setting value acquired by the granulated particle prediction method.

A granulated particle production apparatus according to an embodiment of the present disclosure comprises:
a granulator configured to granulate granulated particles from sintering raw material including a plurality of raw materials; and
a control unit configured to estimate particle size distribution of the granulated particles to be granulated by the granulator, wherein
the control unit predicts content of a specific component of the granulated particles in one particle size range using a component prediction model that inputs granulation conditions, including mix ratio of the raw materials included in the sintering raw material and moisture content of the sintering raw material during granulation, and outputs the content of the specific component of the granulated particles in the one particle size range, where particle size of the granulated particles is divided into a plurality of particle size ranges.

A sintered ore production method according to an embodiment of the present disclosure comprises
producing sintered ore by charging granulated particles produced by the granulated particle production method into a pallet of a sintering machine to form a charge layer, and sintering the charge layer in the sintering machine to produce sintered ore.

### (Advantageous Effect)

According to the present disclosure, a granulated particle prediction method, a granulated particle production method, a granulated particle production apparatus, and a sintered ore production method are provided, each of which can predict granulation and component concentration of granulated particles even when mixing conditions or moisture content of raw materials vary.

### BRIEF DESCRIPTION OF THE DRAWINGS

In the accompanying drawings:
FIG. 1 is a schematic diagram illustrating a granulation facility that implements a granulated particle prediction method and a granulated particle production method according to an embodiment of the present disclosure;
FIG. 2 is a diagram illustrating an example configuration of a control unit;
FIG. 3 is a graph illustrating a relationship between moisture content (mass%) and granulated particle content (mass%);
FIG. 4 is a graph illustrating a relationship between moisture content (mass%) and carbon concentration (mass%) for each granulation range;
FIG. 5 is a diagram illustrating correlation between experimental values and values calculated by regression analysis of granulated particle content (mass%) in granulation range "8.0-2.8";
FIG. 6 is a diagram illustrating correlation between experimental values and values calculated by regression analysis of carbon concentration (mass%) for granulation range "8.0-2.8"; and
FIG. 7 is a diagram illustrating correlation between experimental values and values calculated using a multiple regression model of granulated particle content (mass%) in granulation range "-2.8".

### DETAILED DESCRIPTION

Hereinafter, with reference to the drawings, a granulated particle prediction method, a granulated particle production method, a granulated particle production apparatus, and a sintered ore production method according to an embodiment of the present disclosure are described.

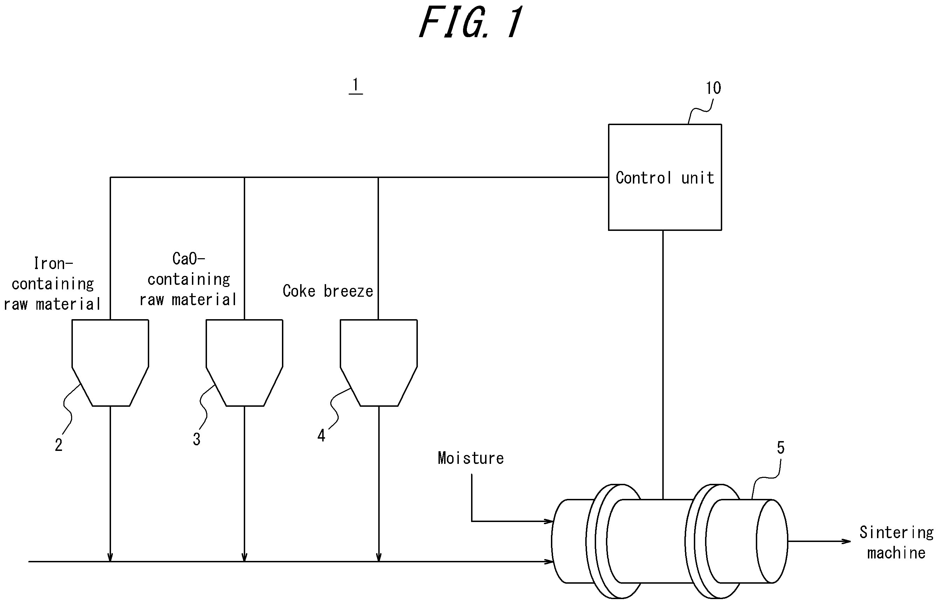

FIG. 1 is a schematic diagram illustrating an example of a granulation facility 1 that implements a granulated particle prediction method and a granulated particle production method according to the present embodiment. The granulation facility 1 includes a mix tank 2 for iron-containing raw material, a mix tank 3 for CaO-containing raw material, a mix tank 4 for coke breeze, a drum mixer 5 as a granulator, and a control unit 10. Defined amounts of iron-containing material, CaO-containing material, and coke breeze are dispensed from each mix tank and mixed to form sintering raw material. The sintering raw material is granulated in the drum mixer 5 with granulation water added as moisture. Here, the drum mixer 5 is just an example of a granulator, and a pelletizer may be used instead. As part of the granulation facility 1, an apparatus including the granulator and the control unit 10 may also be referred to as the granulated particle production apparatus.

The granulated particles are conveyed to a sintering machine, for example, where the granulated particles are sintered to form sintered ore. In the example in FIG. 1, the sintering raw material includes iron-containing raw material, CaO-containing raw material, and coke breeze, but the sintering raw material need only include at least iron-containing raw material and coke breeze.

The control unit 10 controls dispensing of iron-containing raw material from the mix tank 2, dispensing of CaO-containing material from the mix tank 3, dispensing of coke breeze from the mix tank 4, addition of moisture, and operation of the drum mixer 5. Further, the control unit 10 predicts granulated particle content in one of a plurality of particle size ranges of granulated particles to be granulated in the granulation facility 1. Further, the control unit 10 predicts specific component content of the granulated particles. Here, the particle size ranges according to the present embodiment are three categories (more than 8.0 mm, 2.8 mm to 8.0 mm inclusive, and less than 2.8 mm). However, the particles size ranges are not limited to three categories, and may be divided into more or fewer categories. Further, the content of granulated particles in one range of a plurality of particle size ranges may hereinafter be referred to as "granulation". Further, in the description of the present embodiment, tables and drawings, the above three categories may be denoted as "+8.0", "8.0-2.8" and "-2.8". That is, "+8.0" indicates a particle size range of more than 8.0 mm, "8.0-2.8" indicates a particle size range from 2.8 mm to 8.0 mm inclusive, and "-2.8" indicates a particle size range of less than 2.8 mm. The particle size distribution of the granulated particles is determined by determining the granulation of all the particle size ranges among such particle size ranges.

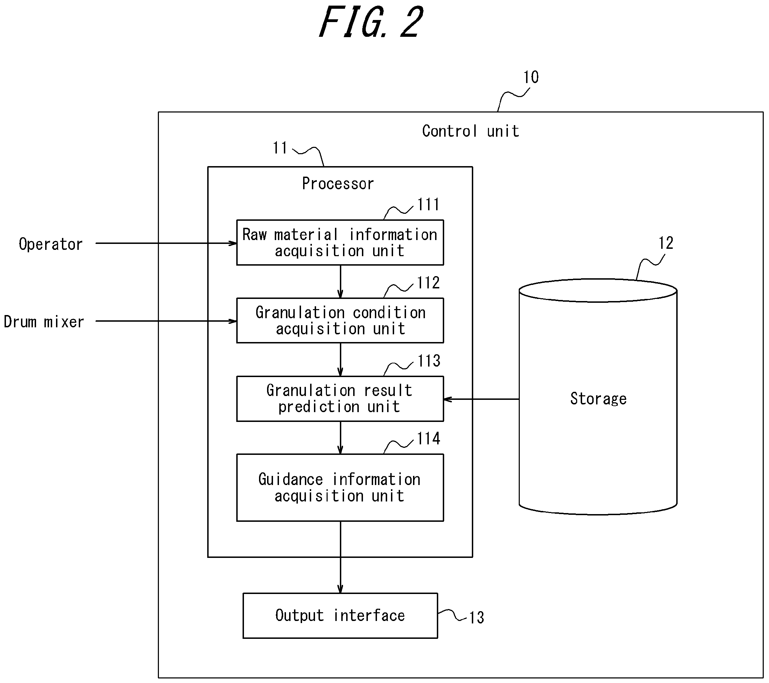

FIG. 2 is a diagram illustrating an example configuration of the control unit 10. The control unit 10 includes a processor 11, a storage 12, and an output interface 13. The control unit 10 may be a general-purpose computer, such as a workstation or personal computer. The processor 11 is, for example, a CPU or the like, which controls the mix tank 2, the mix tank 3, the mix tank 4, and the drum mixer 5 using programs and data stored in the storage 12 to predict the content of granulated particles and the content of a specific component of granulated particles. The storage 12 is, for example, an information recording medium such as an update-recordable flash memory, an internal hard disk or a hard disk connected by a data communication terminal, a memory card, or the like. The storage 12 stores programs to realize each function of the processor 11, data used during program execution, and the like. The output interface 13 is, for example, an LCD or CRT display.

The processor 11 includes a raw material information acquisition unit 111, a granulation condition acquisition unit 112, a granulation result prediction unit 113, and a guidance information acquisition unit 114. Here, the arrows in FIG. 2 outline the flow of processing and main data.

The raw material information acquisition unit 111 acquires raw material information, including composition and granulation of raw material mixed in sintering raw material, and the mix proportion of each raw material. The mix proportion of each raw material may be acquired as a mix ratio. For example, when iron ore, limestone, and coke powder are mixed to make sintering raw material, the raw material information acquisition unit 111 acquires granulation, chemical composition, and mix ratio of the iron ore, limestone, and coke powder, respectively. Here, the granulation, chemical composition, and mix ratio may be automatically entered into the raw material information acquisition unit 111 via a network, or may be entered into the raw material information acquisition unit 111 by an operator. Further, the mix ratio may be acquired from setting information or actual values from the mix tank 2, the mix tank 3, and the mix tank 4. The raw material information acquisition unit 111 outputs raw material information, including composition and granulation of each raw material to be mixed in sintering raw material, and the mix ratio of each raw material, to the granulation condition acquisition unit 112.

The granulation condition acquisition unit 112 acquires granulation conditions from the raw material information acquisition unit 111 and the drum mixer 5. The granulation conditions include at least the mix ratio of the raw materials contained in the sintering raw material acquired from the raw material information acquisition unit 111 and moisture content of the sintering raw material during granulation. The moisture content of the sintering raw material during granulation is determined from the moisture content of each raw material and granulation water added to the drum mixer 5. The moisture content of each raw material is measured, for example, using an infrared moisture meter. The granulation conditions may include at least one of the following: granulation of raw material, occupation, rotational speed, and residence time of the drum mixer 5.

The granulation result prediction unit 113 predicts granulation and content of a specific component of granulated particles to be granulated by the drum mixer 5. Here, the granulation result prediction unit 113 may predict at least one of the granulation or the content of the specific component of the granulated particles. According to the present embodiment, the granulation result prediction unit 113 predicts the granulation and the content of the specific component of the granulated particles. However, for example, the granulation result prediction unit 113 may predict only the granulation of the granulated particles or only the content of the specific component of the granulated particles.

First, prediction of the granulation of the granulated particles is explained. The granulation result prediction unit 113 predicts the granulation of granulated particles in one particle size range. The granulation result prediction unit 113, for example, reads from the storage 12 a granulation prediction model that inputs the granulation of coke breeze, the mix ratio of each raw material, and the moisture content of the sintering raw material during granulation, and outputs the granulation of the granulated particles. The granulation result prediction unit 113 can predict the granulation of granulated particles by inputting the granulation of coke breeze, the mix ratio of each ingredient, and the moisture content of sintering raw material during granulation into a granulation prediction model.

The granulation prediction model may be a multiple regression model in which the explanatory variables are the granulation of the coke breeze, the mix ratio of each raw material, and the moisture content of the sintering raw material during granulation, and the dependent variable is the granulation of the granulated particles. The granulation prediction model may be a trained machine learning model where the input is the granulation of the coke breeze, the mix ratio of each raw material, and the moisture content of the sintering raw material during granulation, and the output is the granulation of the granulated particles.

When the granulation prediction model is a multiple regression model, each parameter of the multiple regression model is determined in advance using a data set that consists of one set of experimental data on the granulation of coke breeze, the mix ratio of each raw material, the moisture content of the sintering raw material during granulation, and the granulation of granulated particles. The generated multiple regression model is stored in the storage 12. When the granulation prediction model is a machine learning model, machine learning is performed in advance using a data set that consists of one set of experimental data on the granulation of coke breeze, the mix ratio of each raw material, the moisture content of the sintering raw material during granulation, and the granulation of granulated particles. The trained machine learning model is stored in the storage 12. The parameters of the multiple regression model and the trained machine learning model may be updated with an additional data set obtained after generation.

The example of predicting the granulation of granulated particles has been described, but using the same technique, the granulation result prediction unit 113 can also predict the content of a specific component in granulated particles of one particle size range. The granulation result prediction unit 113 uses a component prediction model. The component prediction model inputs the granulation of coke breeze, the mix ratio of each raw material, and the moisture content of the sintering raw material during granulation, and outputs the content of a specific component of the granulated particles of one particle size range of the plurality of particle size ranges. The component prediction model, like the granulation prediction model, may be a multiple regression model or a trained machine learning model. Each parameter of the multiple regression model or the learned machine learning model is determined in advance using a data set that consists of one set of experimental data on the granulation of coke breeze, the mix ratio of each raw material, the moisture content of the sintering raw material during granulation, and the content of a specific component in granulated particles, and is stored in the storage 12.

In the granulated particle prediction method according to the present embodiment, the granulation result prediction unit 113 performs prediction using a granulation prediction model and a component prediction model that input granulation conditions, including the mix ratio of raw materials in the sintering raw material and the moisture content of the sintering raw material during granulation. The granulated particle prediction method according to the present embodiment uses the mix ratio of raw materials and the moisture content of sintering raw material during granulation as input, and therefore can predict the granulation and content of a specific component of granulated particles in one particle size range even when mixing conditions of raw materials and moisture content during granulation vary.

The granulation result prediction unit 113 can predict the granulation and content of a specific component of granulated particles in other particle size ranges using the same method, using the granulation prediction model and the component prediction model that predict for granulated particles in other particle size ranges. In this way, the particle size distribution of the granulated particles can be predicted by predicting the granulation of the granulated particles in all particle size ranges. Further, the component concentration of a specific component of the granulated particles can be predicted by predicting the content of the specific component in all particle size ranges.

The guidance information acquisition unit 114 compares the granulation and content of a specific component of granulated particles predicted by the granulation result prediction unit 113 with target values of granulation and content of the specific component of granulated particles, and executes guidance to approach the target values. As guidance, the guidance information acquisition unit 114 determines a setting value for at least one of the granulation of coke breeze, the mix ratio of each raw material, and the moisture content of the sintering raw material during granulation, such that the granulation of granulated particles and the content of the specific component approach predetermined target values.

Here, segregation of coke breeze into an upper layer of a raw material charging layer of a sintering machine is effective in improving the yield of sintered ore. The yield of sintered ore can be improved by increasing the content of coke breeze in granulated particles of a granularity that is easily charged into the upper layer. The granulation of granulated particles that are likely to be charged into the upper layer can be ascertained by conducting charging experiments. For example, based on the results of such charging experiments, target values for the granulation of the granulated particles and the content of specific components may be determined.

The guidance information acquisition unit 114 can determine the setting value, for example, by retrofitting using the target values, the granulation prediction model, and the component prediction model determined as described above. The setting value determined is at least one of: the granulation of the coke breeze, the mix ratio of each raw material, or the moisture content of sintering raw material during granulation. For example, when acquiring a setting value to achieve a target value of granulation of the granulated particles, the guidance information acquisition unit 114 reads the granulation prediction model from the storage 12. The guidance information acquisition unit 114 then predicts the granulation of the granulated particles while changing input granulation of coke breeze, mix ratio of each raw material, and moisture content of the sintering raw material during granulation. The guidance information acquisition unit 114 determines whether the predicted granulation of the granulated particles has reached the target value. Upon determining that the predicted granulation of the granulated particles has reached the target value, the guidance information acquisition unit 114 uses the input granulation of coke breeze, mix ratio of each raw material, and moisture content of the sintering raw material during granulation as setting values. The guidance information acquisition unit 114 outputs the setting values acquired in this way to the output interface 13.

The output interface 13 outputs the setting values acquired from the guidance information acquisition unit 114 to an operator, for example. When the output interface 13 is an LCD, the output interface 13 displays the setting values. An operator can adjust the granulation conditions for granulated particles based on the setting values displayed on the output interface 13. Here, the guidance information acquisition unit 114 may automatically adjust the granulation conditions for granulated particles using granulation of coke breeze, mix ratio of each raw material, and moisture content of the sintering raw material during granulation, which are acquired as setting values. The granulation facility 1 is able to granulate granulated particles using the setting values acquired in the granulated particle prediction method according to the present embodiment. That is, the granulation facility 1 is able to use the setting values to implement the granulated particle production method. Further, the sintered ore production method may be implemented in which the produced granulated particles are charged into the pallet of a sintering machine to form a charge layer, and the charge layer is sintered in the sintering machine to produce sintered ore.

As described above, the granulated particle prediction method, the granulated particle production method, the granulated particle production apparatus, and the sintered ore production method according to the present embodiment are able to predict the granulation of granulated particles and component concentration of each granulation range, even when the mixing conditions or moisture content of the raw materials vary, due to the configuration described above.

Although an embodiment of the present disclosure has been described based on the drawings, it should be noted that a person skilled in the art may make variations and modifications based on the present disclosure. For example, functions and the like included in each component or the like may be rearranged, and multiple components or the like may be combined into one or divided, as long as no logical inconsistency results. The embodiment according to the present disclosure may be realized as a program executed by a processor provided to an apparatus or as a storage medium on which the program is stored. The scope of the present disclosure should be understood to include these examples.

For example, in the example in FIG. 2, the control unit 10 includes the guidance information acquisition unit 114, but the control unit 10 does not have to include the guidance information acquisition unit 114. However, the guidance information acquisition unit 114 facilitates adjustment of the production conditions of the granulated particles based on the prediction of granulation and component concentration of the granulated particles, and therefore the control unit 10 preferably includes the guidance information acquisition unit 114.

Further, according to the embodiment described above, the granulation prediction model and the component prediction model are described as including the granulation of coke breeze as input, but the granulation of coke breeze need not be included. The granulation prediction model and the component prediction model need only include as inputs the mix ratio of the raw materials and the moisture content of the sintering raw material during granulation, and may be configured to not include the granulation of coke breeze as an input. However, the granulation of each raw material affects granulation of sintering raw material, and therefore the input preferably includes the granulation of coke breeze. Here, instead of granulation of coke breeze, granulation or component concentration of another raw material may be used as input.

The granulation prediction model and the component prediction model may further include at least one of the occupation of the drum mixer 5, the rotation speed of the drum mixer 5, and residence time as inputs. An estimate may be used as the residence time, which is estimated from the amount of sintering raw material processed by the drum mixer 5. As explained in Example 2 below, the occupation of the drum mixer 5, the rotation speed of the drum mixer 5, and the residence time affect the granulation and component concentration of the granulated particles. Therefore, by including at least one of the occupation of the drum mixer 5, the rotation speed of the drum mixer 5, or the residence time in the inputs of the granulation prediction model and the component prediction model, higher precision prediction of granulation of the granulated particles and component concentration of a specific component for each granulation range becomes possible.

The advantageous effects of the present disclosure will be described in detail below based on examples, although the present disclosure is not limited to these examples.

### (Example 1)

For Example 1, the following test method was followed. First, 8 kg of a defined mix of sintering raw material was entered into the drum mixer 5 having a diameter of 0.3 m and a length of 0.4 m. Water was added to a defined moisture content to granulate the sintering raw material. The granulated particles were then sieved using a sieve having a defined mesh size, and particle size distribution and a chemical component of each granulation range were measured. In the present test method, carbon concentration was measured as the chemical component of each granulation range.

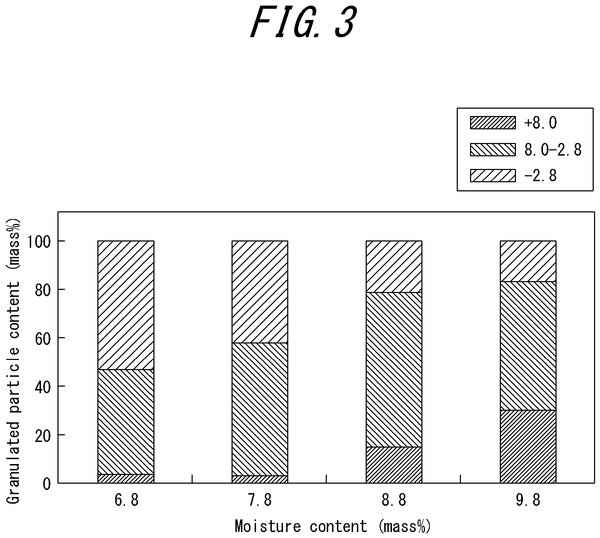

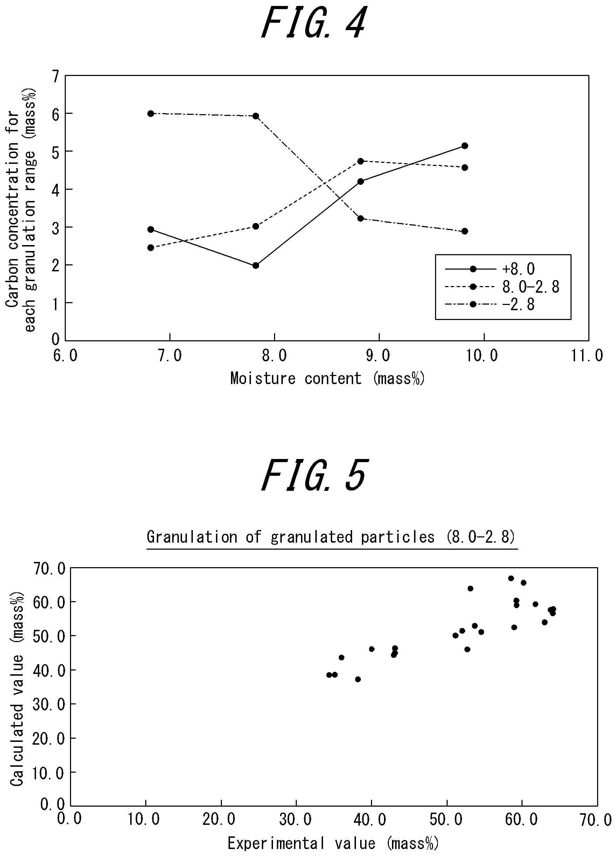

FIG. 3 and FIG. 4 illustrate an effect of moisture content during granulation of T1 to T4, which are each sintering raw material having the same composition. FIG. 3 is a graph illustrating a relationship between moisture content (mass%) and granulated particle content (mass%). FIG. 4 is a graph illustrating a relationship between moisture content (mass%) and carbon concentration (mass%) for each granulation range. The graph and plots for the moisture content of 6.8 mass% are the measured data (experimental values) for T1. The graph and plots for the moisture content of 7.8 mass% are the measured data for T2. The graph and plots for the moisture content of 8.8 mass% are the measured data for T3. The graph and plots for the moisture content of 9.8 mass% are the measured data for T4. From FIG. 3 and FIG. 4, it can be seen that particle size distribution and carbon concentration for each granulation range change as the moisture content during granulation changes.

Further, Table 1 lists measured data for various compositions of sintering raw material, including T1 to T4. In Table 1, compositions are listed numerically as the percentage of each raw material when the total is 100. "Ore A", "Ore B", and "Ore C" are iron ores of different grades or origins. Coke breeze granulation is indicated by "-2 mm" for the percentage of particle size less than 2 mm and "-1 mm" for the percentage of particle size less than 1 mm. The particle size distribution and carbon concentration for each granulation range of the granulated particles are listed as mass% of content and concentration for each of the particle size ranges. From Table 1, it can be seen that the particle size distribution and chemical composition of each granulation range varies as the composition and coke breeze granulation varies.

### [Table 1]

**(Table 1)**

| | Mix ratio (mass%) | | | | Coke breeze granulation (mass%) | | Moisture content (mass%) | Particle size distribution of granulated particles (mass%) | | | Carbon concentration of each granulation range (mass%) | | |
|---|---|---|---|---|---|---|---|---|---|---|---|---|---|
| | Ore A | OreB | Ore C | Coke breeze | -2 mm | -1 mm | | +8.0 | 8.0-2.8 | -2.8 | +8.0 | 8.0-2.8 | -2.8 |
| T1 | 19 | 19 | 57 | 5 | 100.0 | 100.0 | 6.8 | 4.0 | 43.0 | 53.0 | 2.9 | 2.5 | 6.0 |
| T2 | 19 | 19 | 57 | 5 | 100.0 | 100.0 | 7.8 | 3.3 | 54.6 | 42.1 | 2.0 | 3.0 | 5.9 |
| T3 | 19 | 19 | 57 | 5 | 100.0 | 100.0 | 8.8 | 15.0 | 63.8 | 21.2 | 4.2 | 4.7 | 3.2 |
| T4 | 19 | 19 | 57 | 5 | 100.0 | 100.0 | 9.8 | 30.2 | 53.1 | 16.7 | 5.1 | 4.6 | 2.9 |
| T5 | 19 | 19 | 57 | 5 | 92.5 | 85.6 | 6.8 | 2.6 | 40.1 | 57.3 | 1.0 | 2.8 | 5.2 |
| T6 | 19 | 19 | 57 | 5 | 92.5 | 85.6 | 7.8 | 7.1 | 59.0 | 33.9 | 2.5 | 3.2 | 5.3 |
| T7 | 19 | 19 | 57 | 5 | 92.5 | 85.6 | 8.8 | 24.3 | 59.3 | 16.4 | 3.1 | 4.2 | 3.7 |
| T8 | 19 | 19 | 57 | 5 | 92.5 | 85.6 | 9.8 | 17.5 | 60.2 | 22.3 | 2.9 | 4.4 | 4.0 |
| T9 | 19 | 19 | 57 | 5 | 92.5 | 85.6 | 6.8 | 2.0 | 52.8 | 45.2 | 0.6 | 2.8 | 6.3 |
| T10 | 19 | 19 | 57 | 5 | 84.9 | 71.1 | 7.8 | 6.3 | 63.0 | 30.7 | 1.6 | 3.4 | 5.6 |
| T11 | 19 | 19 | 57 | 5 | 84.9 | 71.1 | 8.8 | 20.9 | 59.3 | 19.8 | 3.0 | 4.6 | 5.2 |
| T12 | 19 | 19 | 57 | 5 | 84.9 | 71.1 | 9.8 | 24.1 | 58.6 | 17.3 | 3.3 | 5.0 | 4.4 |
| T13 | 38 | 38 | 19 | 5 | 100.0 | 100.0 | 5.9 | 1.7 | 38.2 | 60.1 | 1.6 | 1.9 | 5.3 |
| T14 | 38 | 38 | 19 | 5 | 100.0 | 100.0 | 6.9 | 1.4 | 36.0 | 62.6 | 1.8 | 2.5 | 5.4 |
| T15 | 38 | 38 | 19 | 5 | 100.0 | 100.0 | 7.9 | 12.3 | 51.1 | 36.6 | 3.0 | 3.0 | 5.3 |
| T16 | 38 | 38 | 19 | 5 | 100.0 | 100.0 | 8.9 | 11.9 | 64.1 | 24.0 | 3.9 | 3.4 | 5.0 |
| T17 | 38 | 38 | 19 | 5 | 92.5 | 85.6 | 5.9 | 4.1 | 35.0 | 60.9 | 1.4 | 2.2 | 5.7 |
| T18 | 38 | 38 | 19 | 5 | 92.5 | 85.6 | 6.9 | 1.4 | 43.1 | 55.5 | 0.9 | 2.7 | 4.4 |
| T19 | 38 | 38 | 19 | 5 | 92.5 | 85.6 | 7.9 | 9.6 | 52.0 | 38.4 | 2.9 | 3.2 | 4.1 |
| T20 | 38 | 38 | 19 | 5 | 92.5 | 85.6 | 8.9 | 15.5 | 64.2 | 20.3 | 3.1 | 3.5 | 4.4 |
| T21 | 38 | 38 | 19 | 5 | 92.5 | 85.6 | 5.9 | 0.8 | 34.4 | 64.8 | 1.5 | 1.9 | 4.5 |
| T22 | 38 | 38 | 19 | 5 | 84.9 | 71.1 | 6.9 | 10.4 | 43.2 | 46.4 | 0.0 | 2.5 | 4.5 |
| T23 | 38 | 38 | 19 | 5 | 84.9 | 71.1 | 7.9 | 4.2 | 53.7 | 42.1 | 1.5 | 3.4 | 3.9 |
| T24 | 38 | 38 | 19 | 5 | 84.9 | 71.1 | 8.9 | 19.6 | 61.8 | 18.6 | 2.3 | 3.3 | 4.1 |

Using the experimental data listed in Table 1, the parameters of the multiple regression model for the granulation prediction model and the parameters of the multiple regression model for the component prediction model were determined, and the granulation and chemical composition of each granulation range of the granulated particles were estimated using the granulation prediction model and the component prediction model.

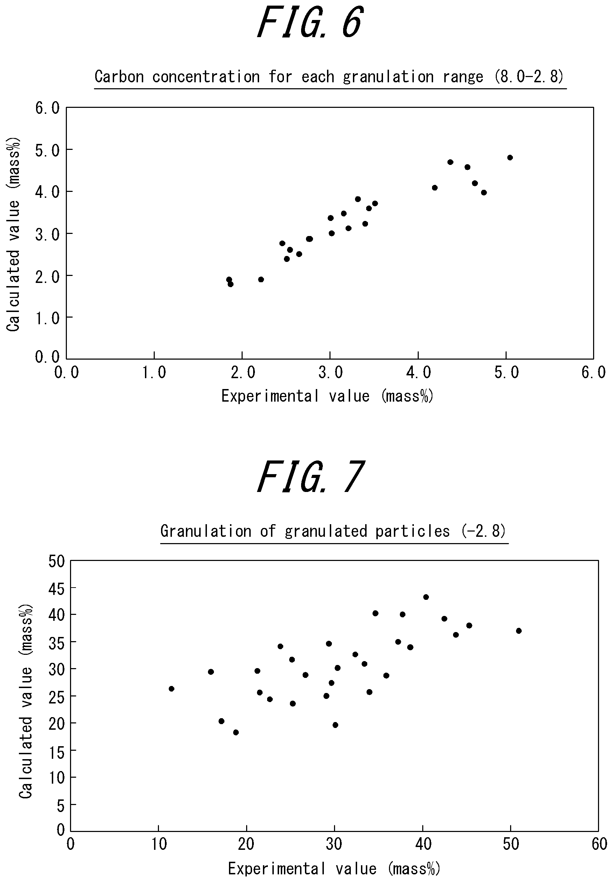

FIG. 5 and FIG. 6 are graphs illustrating correlation between experimental values and values estimated by regression analysis, for granulation of granulated particles and chemical composition of each granulation range. FIG. 5 is a diagram illustrating correlation between experimental values and values calculated by regression analysis of granulated particle content (mass%) in granulation range "8.0-2.8". FIG. 6 is a diagram illustrating correlation between experimental values and values calculated by regression analysis of carbon concentration (mass%) for granulation range "8.0-2.8". As illustrated in FIG. 5 and FIG. 6, there is a strong correlation, indicating that it is possible to estimate the granulation of granulated particles and the chemical composition of each granulation range from each composition and coke breeze granulation.

In the example described above, the granulation prediction model and the component prediction model were multiple regression models (estimating by multiple regression). Here, the granulation prediction model and the component prediction model may be trained machine learning models. For example, as indicated in Table 2, each dependent variable was determined by trained machine learning, which resulted in a larger correlation coefficient than multiple regression, indicating that this estimation method can estimate the granulation and chemical composition of granulated particles with higher precision than multiple regression. Here, "C&R Tree" is a classification and regression tree, which is a kind of machine learning analysis method.

**[Table 2]**

| | | Particle size distribution of granulated particles (mass%) | | | Carbon concentration of each granulation range (mass%) | | |
|---|---|---|---|---|---|---|---|
| | | +8.0 | 8.0-2.8 | -2.8 | +8.0 | 8.0-2.8 | -2.8 |
| Machine learning | Type | C&R Tree | Neural network | C&R Tree | Neural network | C&R Tree | C&R Tree |
| | Correlation coefficient | 0.917 | 0.929 | 0.979 | 0.933 | 0.995 | 0.833 |
| Multiple regression | Correlation coefficient | 0.867 | 0.848 | 0.949 | 0.890 | 0.952 | 0.667 |

### (Example 2)

For Example 2, the following test method was followed. First, 8 kg of a defined mix of sintering raw material was entered into the drum mixer 5 having a diameter of 0.3 m and a length of 0.4 m. Water was added to a defined moisture content to granulate the sintering raw material. The operating conditions of the drum mixer 5, that is, occupation, drum mixer rotation speed, and granulation time, were varied, and the granulation of the " -2.8" range of granulated particles was evaluated. Here, the residence time of the sintering raw material in the drum mixer 5 was used as the granulation time. Hereinafter, the term residence time is used to correspond to granulation time. Table 3 lists the granulation measurements of the "-2.8" range of granulated particles under various operating conditions.

### [Table 3]

**(Table 3)**

| Evaluation number | Occupation (%) | Drum mixer rotation speed (rpm) | Granulation time (s) | -2.8 mm ratio (mass%) |
|---|---|---|---|---|
| 1 | 20 | 20 | 150 | 24 |
| 2 | 20 | 20 | 300 | 27 |
| 3 | 20 | 20 | 450 | 25 |
| 4 | 20 | 20 | 600 | 19 |
| 5 | 20 | 10 | 150 | 35 |
| 6 | 20 | 10 | 300 | 37 |
| 7 | 20 | 10 | 450 | 21 |
| 8 | 20 | 10 | 600 | 23 |
| 9 | 20 | 5 | 150 | 40 |
| 10 | 20 | 5 | 300 | 45 |
| 11 | 20 | 5 | 450 | 32 |
| 12 | 20 | 5 | 600 | 30 |
| 13 | 10 | 20 | 300 | 30 |
| 14 | 10 | 20 | 450 | 29 |
| 15 | 10 | 20 | 600 | 30 |
| 16 | 10 | 10 | 300 | 44 |
| 17 | 10 | 10 | 450 | 34 |
| 18 | 10 | 10 | 600 | 34 |
| 19 | 10 | 5 | 300 | 43 |
| 20 | 10 | 5 | 450 | 39 |
| 21 | 10 | 5 | 600 | 36 |
| 22 | 5 | 20 | 300 | 34 |
| 23 | 5 | 20 | 450 | 22 |
| 24 | 5 | 20 | 600 | 17 |
| 25 | 5 | 10 | 300 | 51 |
| 26 | 5 | 10 | 450 | 25 |
| 27 | 5 | 10 | 600 | 12 |
| 28 | 5 | 5 | 300 | 38 |
| 29 | 5 | 5 | 450 | 29 |
| 30 | 5 | 5 | 600 | 16 |

Using the experimental data listed in Table 3, each parameter of the multiple regression model, which is a granulation prediction model with occupation, drum mixer rotation speed, and residence time as inputs and -2.8 mm granulation as output, was determined, and the -2.8 mm granulation was estimated using this granulation prediction model.

FIG. 7 is a diagram illustrating correlation between experimental values and values calculated using the multiple regression model of granulated particle content (mass%) in the granulation range "-2.8".

The results confirmed that the occupation, drum mixer rotation speed, and residence time affect the granulation of the granulated particles. Therefore, it can be seen that the prediction accuracy of granulation of granulated particles can be improved by further adding at least one of the following to the input of the granulation prediction model: occupation, drum mixer rotation speed, or residence time.

### REFERENCE SIGNS LIST

- 1: granulation facility
- 2: mix tank
- 3: mix tank
- 4: mix tank
- 5: drum mixer
- 10: control unit
- 11: processor
- 12: storage
- 13: output interface
- 111: raw material information acquisition unit
- 112: granulation condition acquisition unit
- 113: granulation result prediction unit
- 114: guidance information acquisition unit

## Claims

1. A granulated particle prediction method for granulated particles produced by adding moisture to sintering raw material including iron-containing raw material and coke breeze and granulating in a granulator, the granulated particle prediction method comprising
predicting granulation of the granulated particles using a granulation prediction model that inputs granulation conditions, including mix ratio of the raw materials included in the sintering raw material and moisture content of the sintering raw material during granulation, and outputs the granulation of the granulated particles.

2. The granulated particle prediction method according to claim 1, further comprising predicting particle size distribution of the granulated particles by predicting the granulation of the granulated particles in all particle size ranges.

3. The granulated particle prediction method according to claim 1 or 2, wherein the granulation conditions further include at least one of granulator occupation, granulator rotation speed, or residence time.

4. The granulated particle prediction method according to any one of claims 1 to 3, wherein the granulation prediction model is used to acquire a setting value of the granulation conditions that can be used to achieve a target granulation of the granulated particles.

5. A granulated particle production method for granulated particles produced by adding moisture to sintering raw material including iron-containing raw material and coke breeze and granulating, the granulated particle production method comprising:
granulating the granulated particles using the setting value acquired by the granulated particle prediction method according to claim 4.

6. A granulated particle production apparatus comprising:
a granulator configured to granulate granulated particles from sintering raw material including a plurality of raw materials; and
a control unit configured to estimate particle size distribution of the granulated particles to be granulated by the granulator, wherein
the control unit predicts granulation of the granulated particles using a granulation prediction model that inputs granulation conditions, including mix ratio of the raw materials included in the sintering raw material and moisture content of the sintering raw material during granulation, and outputs the granulation of the granulated particles.

7. A granulated particle prediction method for granulated particles produced by adding moisture to sintering raw material including iron-containing raw material and coke breeze and granulating in a granulator, the granulated particle prediction method comprising
predicting content of a specific component of the granulated particles in one particle size range using a component prediction model that inputs granulation conditions, including mix ratio of the raw materials included in the sintering raw material and moisture content of the sintering raw material during granulation, and outputs the content of the specific component of the granulated particles in the one particle size range, where particle size of the granulated particles is divided into a plurality of particle size ranges.

8. The granulated particle prediction method according to claim 7, further comprising predicting specific component content of the granulated particles by predicting the specific component content of the granulated particles in all particle size ranges.

9. The granulated particle prediction method according to claim 7 or 8, wherein the granulation conditions further include at least one of granulator occupation, granulator rotation speed, or residence time.

10. The granulated particle prediction method according to any one of claims 7 to 9, wherein the component prediction model is used to acquire a setting value of the granulation conditions that can be used to achieve a target specific component content.

11. A granulated particle production method for granulated particles produced by adding moisture to sintering raw material including iron-containing raw material and coke breeze and granulating, the granulated particle production method comprising:
granulating the granulated particles using the setting value acquired by the granulated particle prediction method according to claim 10.

12. A granulated particle production apparatus comprising:
a granulator configured to granulate granulated particles from sintering raw material including a plurality of raw materials; and
a control unit configured to estimate particle size distribution of the granulated particles to be granulated by the granulator, wherein
the control unit predicts content of a specific component of the granulated particles in one particle size range using a component prediction model that inputs granulation conditions, including mix ratio of the raw materials included in the sintering raw material and moisture content of the sintering raw material during granulation, and outputs the content of the specific component of the granulated particles in the one particle size range, where particle size of the granulated particles is divided into a plurality of particle size ranges.

13. A sintered ore production method of producing sintered ore by charging granulated particles produced by the granulated particle production method according to claim 5 or 11 into a pallet of a sintering machine to form a charge layer, and sintering the charge layer in the sintering machine to produce sintered ore.
